# EUROPÄISCHE PATENTSCHRIFT

(11) **EP 0 863 315 B1**
(45) Veröffentlichungstag und Bekanntmachung des Hinweises auf die Patenterteilung: **11.02.2004**
(21) Anmeldenummer: 98103865.6
(22) Anmeldetag: 05.03.1998
(51) Int. Cl.: F16B 1/00, H02B 1/46, F16B 21/02, E05C 19/06

(54) **Befestigungsvorrichtung**
Fastening device
Dispositif de fixation

(30) Priorität: 05.03.1997 DE 19708838
(43) Veröffentlichungstag der Anmeldung: 09.09.1998
(73) Patentinhaber: Hager Electro GmbH, 66131 Saarbrücken (DE)
(72) Erfinder: Kelaiditis, Konstantin, Dr.-Ing, 66386 St.Ingbert (DE); Kessler, Franz, 66271 Kleinblittersdorf (DE)
(74) Vertreter: Bernhardt, Winfrid, Dr.-Ing.

(56) Entgegenhaltungen:
- EP-A- 0 248 337
- DE-A- 19 530 034
- US-A- 5 011 356

## Beschreibung

Die Erfindung betrifft eine Befestigungsvorrichtung mit einem ein zu befestigendes Teil hintergreifenden, in einer Drehlagerung angeordneten und mit einer Gegenlagerhalterung verhakbaren Drehbefestigungselement, das bolzenartig mit einem Schaftteil und einem Verhakungskopf ausgebildet ist, wobei der Verhakungskopf bei Vorschub des Drehbefestigungselements in Richtung seiner Drehachse in einer Richtung senkrecht zur Drehachse elastisch nachgibt, um in einer ersten Verhakungsdrehstellung an der Gegenlagerhalterung einzuschnappen, und wobei das Drehbefestigungselement aus der ersten Verhakungsdrehstellung in eine zweite Verhakungsdrehstellung drehbar ist.

Die US 5 011 356 beschreibt eine solche Befestigungsvorrichtung, welche zur Verbindung von Plattenlagen dient. Der Verhakungskopf hintergreift die Plattenlage, welche durch den Verhakungskopf und einen Kopf am anderen Ende des Drehbefestigungselements zusammengehalten wird. Der Verhakungskopf weist sich kreuzende, axial versetzte Paare von Hakenelementen auf, wobei ein Paar durch flexible Finger gebildet ist, die sich beim Einschieben des bolzenförmigen Drehbefestigungselements in Öffnungen in den Plattenlagen an den Kopf anlegen und sich nach Durchgang des Kopfs durch letzte Plattenlagen aufspreizen. Durch Drehung um 90° kommt das andere Paar steiferer Hakenelemente zum Einsatz, durch welches die Plattenlagen fest zusammengehalten werden, wobei an den steiferen Hakenelementen angebrachte Schultern für eine drehfeste Verklemmung des Drehbefestigungselements in der letzten Plattenlage sorgen.

Die vorliegende Erfindung schafft eine neue, zu anderen Zwecken verwendbare Befestigungsvorrichtung.

Die Vorrichtung nach der Erfindung ist dadurch gekennzeichnet, dass das Drehbefestigungselement einen den Verhakungskopf mit dem Schaftteil verbindenden, gegenüber dem Schaftteil im Querschnitt geschwächten Schaftabschnitt aufweist, welcher in der ersten Verhakungsdrehstellung in der genannten Richtung senkrecht zur Drehachse abbiegbar und in der zweiten Verhakungsdrehstellung in dieser Richtung weniger biegsam ist.

Gemäß der Erfindung kann der Verhakungskopf in der ersten Verhakungsdrehstellung unter Verschwenkung in seiner Gesamtheit an der Gegenlagerhalterung einrasten und der flexible Bolzenabschnitt weitgehend freistehen und dennoch in der zweiten Verhakungsdrehstellung Querkräfte in der genannten Richtung senkrecht zur Drehachse aufnehmen.

Ein zu befestigender Gegenstand kann zunächst in bequemer Weise durch Einschnappen des in seiner Gesamtheit verschwenkten Verhakungskopfs in der ersten Verhakungsdrehstellung in einen vorläufigen Befestigungszustand gebracht werden. In diesem Zustand ist das Drehbefestigungselement durch über die Gegenlagerhalterung auf sie einwirkende Querkräfte nur in geringem Maße belastbar, so dass ein in dieser Weise befestigter Gegenstand entsprechend senkrecht zur Drehachse des Drehbefestigungselements verschiebbar und ggf. aus einer anderen, zur Befestigung des Gegenstandes verwendeten und zu der erstgenannten Verhakung bezüglich dieser Querverschiebung ein Gegenlager bildenden Verhakung lösbar wäre. Zur endgültigen Befestigung wird das Drehbefestigungselement daher in die zweite Drehstellung gebracht, in der durch die in dieser Stellung größere Steifigkeit des Drehbefestigungselements die genannte Querverschiebung des befestigten Gegenstandes nicht möglich ist und der Gegenstand dementsprechend nicht durch Lösung einer weiteren Verhakung aus der Verhakung mit dem Drehbefestigungselement gelöst werden kann.

Ein bevorzugtes Anwendungsgebiet für das erfindungsgemäße Drehbefestigungselement ist die Befestigung von Abdeckungen über elektrischen Verteilereinrichtungen, bei denen es darauf ankommt, dass die Abdeckung möglichst unverrückbar über der Verteilereinrichtung installiert ist und dadurch Manipulationen an der Verteilereinrichtung ausgeschlossen sind. Eine Abdeckung kann beispielsweise mit zwei der beschriebenen Befestigungsvorrichtungen auf einer Seite und zwei Schnappverhakungen auf der gegenüberliegenden Seite der Abdeckung erfolgen, wobei für die Schnappverhakungen auf der gegenüberliegenden Seite die gleiche Gegenlagerhalterung wie die Befestigungsvorrichtung mit den Drehbefestigungselementen verwendet werden kann und wobei auf dieser Seite zur Verhakung mit der Gegenlagerhalterung einstückig mit der Abdeckung verbundene Verhakungsteile verwendbar sind.

In einer bevorzugten Ausführungsform der Erfindung ist eine weitere Drehstellung des Drehbefestigungselements vorgesehen, in der das Drehbefestigungselement unverhakt und aus seiner axialen Verhakungsposition zurückziehbar ist. In dieser weiteren Drehstellung kann das befestigte Teil leicht aus der Befestigungsstellung entfernt werden, nachdem die Verhakung aufgehoben worden ist.

Der Drehwinkel zwischen der ersten Verhakungsdrehstellung und der anderen genannten Drehstellung kann z.B. 90° betragen.

In einer weiteren bevorzugten Ausführungsform der Erfindung ist als Drehlagerung für das Drehbefestigungselement ein insbesondere mit dem zu befestigenden Gegenstand verbundenes Buchsenteil vorgesehen. Das Buchsenteil kann z.B. einstückig mit einer zu befestigenden, hauben- oder deckelartigen Abdeckung verbunden sein und von der Abdeckungsinnenseite in Richtung zu der Gegenlagerhalterung vorstehen.

Der im Querschnitt geschwächte Schaftabschnitt ist vorzugsweise als Steg mit einer dem Durchmesser des Schaftteils entsprechenden Breite ausgebildet ist. In diesem Fall übt die Gegenlagerhalterung beim Vorschieben des Drehbefestigungselements zum Einschnappen eine Verformungskraft in Richtung der Breitseite des Steges aus, so dass für die Biegefestigkeit nur dessen im Vergleich zum Durchmesser des Schaftteils geringere Stegdicke wirksam ist. In der zweiten Drehstellung kann die Gegenlagerhalterung dagegen nur in Längsrichtung des Stegquerschnittes wirken, in der nur eine geringe Verbiegung des Steges möglich ist. Wirkt daher auf den befestigten Gegenstand, z.B. eine Abdeckhaube mit einem damit verbundenen Buchsenteil, eine Kraft derart ein, dass das Drehbefestigungselement in einer Richtung senkrecht zur Drehachse gegen die Gegenlagerhalterung gedrückt wird, so kann der Gegenstand dementsprechend nicht verschoben und z.B. aus einer dem Drehbefestigungselement in Richtung senkrecht zur Drehachse gegenüberliegenden Verhakung gelöst werden.

Durch die Verschiebbarkeit des Drehbefestigungselements in der Drehlagerung in Richtung seiner Drehachse braucht zur Verhakung nur das durch die Drehlagerung in Drehachsenrichtung geführte Drehbefestigungselement bewegt zu werden, während der zu befestigende Gegenstand z.B. in seiner Befestigungsstellung festzuhalten ist.

In weiterer vorteilhafter Ausgestaltung der Erfindung ist das Drehbefestigungselement in seiner Drehlagerung unverlierbar gehaltert. Insbesondere bei vorübergehender Demontage eines befestigten Teiles ist daher kein besonderer Aufwand zur Zwischenaufbewahrung des Drehbefestigungselements erforderlich. In der beschriebenen bevorzugten Ausführungsform als Drehbefestigungsbolzen mit einem Verhakungskopf hintergreift der Verhakungskopf die Drehlagerung, wobei er insbesondere flexibel ausgebildet und bei der Montage unter Verengung durch die Drehlagerung hindurchgeführt werden kann. Vorzugsweise ist diese Flexibilität des Verhakungskopfes durch eine am Verhakungskopf durch Hinterschneidung gebildete Lippe gewährleistet, die beim Durchführen des Verhakungskopfes durch die vorzugsweise buchsenartig ausgebildete Drehlagerung entsprechend nachgibt und danach die Drehlagerung hintergreift.

In weiterer vorteilhafter Ausgestaltung der Erfindung weist der Verhakungskopf eine beim Verhakungsvorschub gegen ein Zungenteil der Gegenlagerhalterung anliegende, zur Vorschubrichtung des Drehbefestigungselements geneigte Gleitfläche auf. Durch diese Gleitfläche wird die zur Verhakung erforderliche Verformung des Drehbefestigungselements in der ersten Verhakungsstellung wesentlich erleichtert.

In weiterer vorteilhafter Ausgestaltung der Erfindung ist vorgesehen, dass der Verhakungskopf eine gegen ein Zungenteil der Gegenlagerhalterung anlegbare, eine axiale Verschiebung des Drehbefestigungselements beim Übergang von der ersten Verhakungsdrehstellung in die genannte weitere Drehstellung bewirkende, in der Art einer Schraubenfläche angeordnete Gleitfläche aufweist. Durch diese Maßnahme wird beim Lösen der Befestigung der Bolzen in Richtung seiner Drehachse verschoben, so dass er z.B. von einer Oberfläche eines befestigten Deckels vorsteht, wobei diese Verschiebung vorteilhaft die verhakungsfreie Position anzeigt, in der der Deckel mit dem Drehbefestigungselement oder nur das Drehbefestigungselement aus der der Verhakung entsprechenden axialen Position entfernt werden kann.

Vorteilhaft kann femer vorgesehen sein, dass der Zungenteil der Gegenlagerhalterung auf einer einem Gegenlageranschlag gegenüberliegenden Seite eine entsprechend der Schraubengleitfläche abgeschrägte Gleitfläche aufweist. Eine solche Gleitfläche setzt die Reibung zwischen der Schraubengleitfläche und dem Zungenteil herab und erleichtert daher die Drehung des Drehbefestigungselements in die verhakungsfreie Stellung unter axialer Verschiebung des Drehbefestigungselements.

In einer weiteren bevorzugten Ausführungsform der Erfindung ist vorgesehen, dass beim Drehübergang zwischen der ersten und zweiten Verhakungsdrehstellung ein Widerstand zu überwinden ist, wobei ein solcher Widerstand in der vorangehend beschriebenen besonderen Ausführungsform durch eine in einem axialen Bereich des geschwächten Abschnitts des Drehbefestigungselements innenseitig von der Drehlagerung vorstehende, die Drehung des Drehbefestigungselements hemmende Nase gebildet sein kann. Durch den zu überwindenden Widerstand wird vorteilhaft das Erreichen der zweiten Verhakungsdrehstellung angezeigt, in der eine sichere Befestigung des Gegenstandes gewährleistet ist. Andererseits sorgt der Widerstand dafür, dass das Drehbefestigungselement nicht ungewollt, z.B. unter dem Einfluß von Erschütterungen, aus der zweiten Verhakungsdrehstellung in die weniger stabile erste Verhakungsdrehstellung gelangt.

In weiterer vorteilhafter Ausgestaltung der Erfindung sind Anschläge zur Begrenzung des Drehbereichs des Drehbefestigungselements vorgesehen, wobei diese Anschläge in dem vorangehend beschriebenen Ausführungsbeispiel mit einem Buchsenteil vorzugsweise durch eine sich über einen Abschnitt des Buchseninnenumfangs erstreckende Ausnehmung in dem Buchsenteil und eine mit dem Drehbefestigungselement verbundene, in die Ausnehmung eingreifende Anschlagnase gebildet sind. Vorteilhaft ist durch diese Anschläge der Drehbereich des Drehbefestigungselements mit seinen Arbeitsdrehstellungen festgelegt, wobei dieser Drehbereich z.B. 180° betragen kann. Durch die Drehbereichsbegrenzung kann z.B. verhindert werden, dass der Verhakungskopf in nicht vorgesehene Drehpositionen gelangt, in denen Teile des Verhakungskopfes durch die Gegenlagerhalterung beschädigt werden könnten.

Insbesondere kann vorgesehen sein, dass die Ausnehmung auf einer dem Verhakungskopf abgewandten axialen Seite durchgehend offen und die axialen Längen der Ausnehmung und der Anschlagnase so bemessen sind, dass bei einem Anschlag des Verhakungskopfes gegen das Buchsenteil die Anschlagnase wenigstens mit einem Teil ihrer axialen Länge in der Ausnehmung verbleibt. Durch diese Maßnahme wird verhindert, dass die Anschlagnase zur Verschiebung des Drehbefestigungselements in die zur vorläufigen Befestigung erforderliche axiale Stellung erst in die Ausnehmung eingeführt werden muß.

Vorzugsweise weist das Buchsenteil an seinem dem Verhakungskopf abgewandten Ende eine Aufweitung zur Versenkung eines Kopfteils des Drehbefestigungselements auf. Der zweckmäßig mit einem Schraubendreherschlitz versehene Kopfteil ist in einer weiteren bevorzugten Ausführungsform der Erfindung mit wenigstens einer Ausnehmung für den Eingriff eines die Drehung des Drehbefestigungselements blockierenden, insbesondere in seiner Blockierstellung plombierbaren Verriegelungsteils versehen, wobei die Eingriffsausnehmung insbesondere zur Drehblockierung in der zweiten Verhakungsdrehstellung angeordnet ist.

In einer alternativen Ausführungsform der Erfindung weist das Drehbefestigungselement einen sich von dem Verhakungskopf erstreckenden Verlängerungsansatz für die Bildung eines das Drehbefestigungselement in der zweiten Verhakungsdrehstellung festlegenden Anschlags auf, wobei der Verlängerungsansatz vorzugsweise durch einen zu dem Steg ausgerichteten Stegansatz gebildet ist, der eine die unbehinderte Schnappverhakung gewährleistende Materialaussparung aufweist. Vorzugsweise ist auch das zu befestigende Teil in der Richtung senkrecht zur Drehachsenrichtung an der Gegenlagerhalterung festlegbar.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1: ein Ausführungsbeispiel für eine erfindungsgemäße, zur Befestigung einer Abdeckhaube verwendete Befestigungsvorrichtung mit einem Drehbefestigungselement in einer ersten Verhakungsdrehstellung.
- Fig. 2: das Ausführungsbeispiel von Fig. 1 mit dem Drehbefestigungselement in einer zweiten Verhakungsdrehstellung.
- Fig. 3: das in der Vorrichtung von Fig. 1 und 2 verwendete Drehbefestigungselement (spiegelbildlich) in einer perspektivischen Ansicht,
- Fig. 4: das in der Fig. 3 gezeigte Drehbefestigungselement in einer weiteren perspektivischen Ansicht,
- Fig. 5: das in der Fig. 3 gezeigte Drehbefestigungselement in einer Seitenansicht,
- Fig. 6: das in der Fig. 5 gezeigte Drehbefestigungselement in einer zu der Seitenansicht von Fig. 5 senkrechten Seitenansicht,
- Fig. 7: das in der Fig. 5 gezeigten Drehbefestigungselement in einer zu der Ansicht von Fig. 5 um 45° verdrehten Seitenansicht.
- Fig. 8: ein weiteres Ausführungsbeispiel für eine erfindungsgemäße Befestigungsvorrichtung, und
- Fig. 9: Detailansichten eines in der Befestigungsvorrichtung von Fig. 8 verwendeten Drehbefestigungselements.

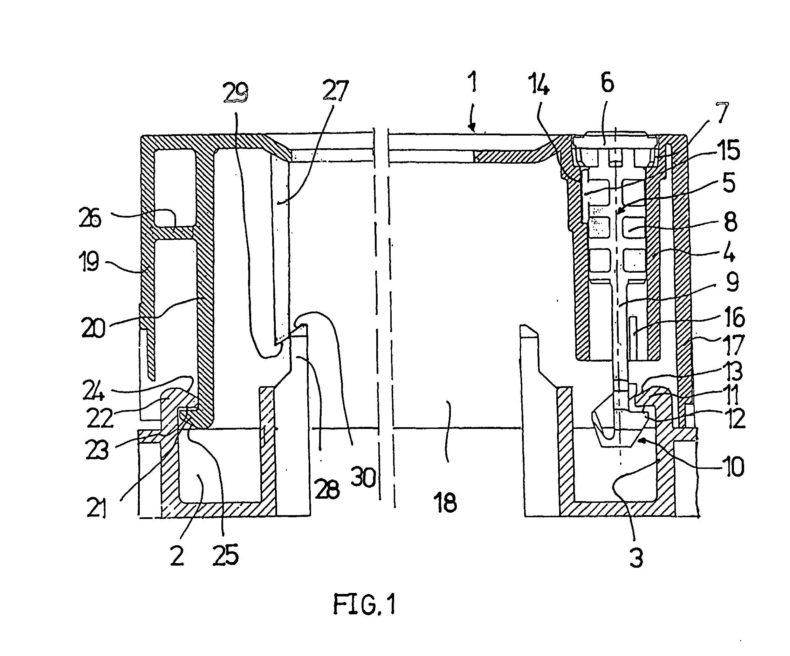

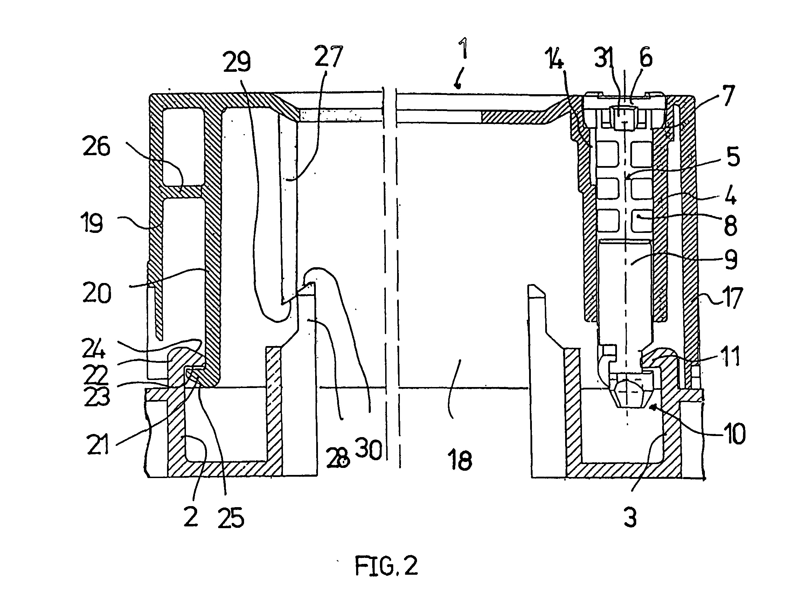

Mit dem Bezugszeichen 1 ist in den Fig. 1 und 2 eine zu befestigende Abdeckhaube aus Kunststoff mit Seitenwänden 17 bis 19 bezeichnet, zu deren Befestigung über einer nicht dargestellten elektrischen Verteilereinrichtung Gegenlagerhalterungen 2 und 3 vorgesehen sind, welche ihrerseits an nicht gezeigten Rahmenteilen der genannten Verteilereinrichtung befestigt sind. Die Gegenlagerhalterungen 2 und 3 sind in Eckbereichen der Abdeckhaube 1 angeordnet, wobei den Gegenlagerhalterungen 2 und 3 entsprechende Teile auch in den in der Schnittdarstellung von Fig. 1 nicht sichtbaren Eckbereichen der Abdeckhaube 1 angeordnet sind.

Mit dem Bezugszeichen 4 ist in den Fig. 1 und 2 ein an die Abdeckhaube 1 einstückig angeformtes Buchsenteil bezeichnet, in dem ein Drehbefestigungselement 5 drehbar und in Richtung seiner Drehachse verschiebbar gelagert ist. Eine entsprechende Anordnung mit einem Drehbefestigungselement 5 und einem angeformten Buchsenteil 4 ist in dem in Fig. 1 nicht sichtbaren gegenüberliegenden Eckbereich der Abdeckhaube 1 vorgesehen. Anstelle der Ausführung mit zwei Drehbefestigungselementen 5 konnte z.B. auch nur ein Drehbefestigungselement und eine entsprechende Gegenlagerhalterung in der Längsmitte der Seitenwand 17 vorgesehen sein.

Das in dem gezeigten Ausführungsbeispiel im wesentlichen bolzenförmig ausgebildete Drehbefestigungselement 5 weist einen die Abdeckhaube 1 hintergreifenden Kopfteil 6 auf, welcher in eine entsprechende Aufweitung 7 des Buchsenteils 4 eingesenkt ist. Mit der Bezugszahl 31 ist in der Fig. 2 eine in dem Kopfteil 6 des Drehbefestigungsbolzens 5 vorgesehene Ausnehmung bezeichnet.

An den Kopfteil 6 des Drehbefestigungsbolzens 5 schließt sich ein Schaftteil 8 an, welcher über seinen Umfang gegen die Innenseite des Buchsenteils 4 anliegt und im wesentlichen der drehbaren Lagerung und Führung des Drehbefestigungsbolzens 5 in dem Buchsenteil 4 dient.

Von dem Schaftteil 8 erstreckt sich in Richtung der Drehachse des Drehbefestigungsbolzens 5 ein Stegteil 9, dessen Breite etwa dem Durchmesser des Schaftteils 8 entspricht, dessen Dicke aber nur etwa ein Viertel des Durchmessers des Schaftteils 8 beträgt.

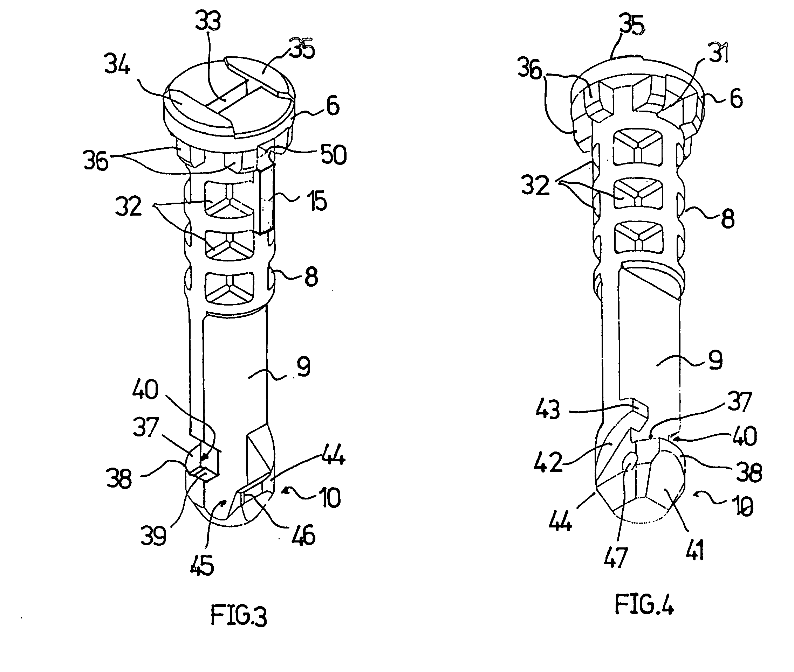

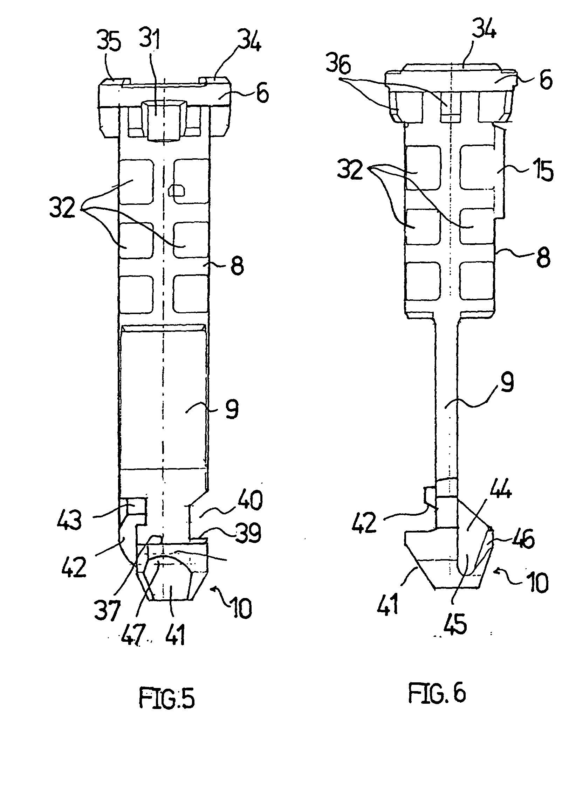

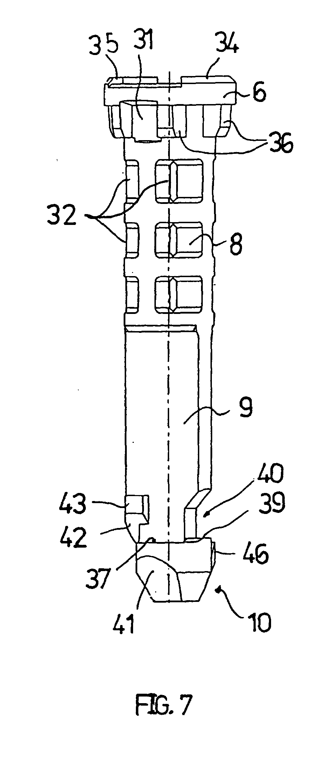

Der leicht versetzt zur Drehachse des Drehbefestigungsbolzens 5 angeordnete Stegteil 9 steht über das Buchsenteil 4 hinaus vor und weist an seinem dem Schaftteil 8 entgegengesetzten Ende einen Verhakungskopf 10 auf, welcher anhand der Fig. 3 bis 7 noch genauer beschrieben wird.

In den in den Fig. 1 und 2 gezeigten Drehstellungen hintergreift der Verhakungskopf 10 ein Zungenteil 11 mit einem Gegenlageranschlag 12 und mit einer dem Gegenlageranschlag 12 an dem Zungenteil gegenüberliegend vorgesehenen abgeschrägten Gleitfläche 13.

Mit der Bezugszahl 14 ist in den Fig. 1 und 2 ein sich über einen Winkel von etwa 180° um den Innenumfang des Buchsenteils 4 erstreckende Ausnehmung bezeichnet, in welche eine mit dem Schaftteil 8 des Drehbefestigungsbolzens 5 einstückig verbundene Anschlagnase 15 eingreift.

Mit der Bezugszahl 16 ist in den Fig. 1 und 2 eine von der Innenfläche des Buchsenteils 4 vorstehende Nase bezeichnet, welche sich von der Innenwand des Buchsenteils 4 so weit erstreckt, daß sie die Drehung des mit dem Stegteil 9 gegen die Nase 16 anstoßenden Drehbefestigungselements 5 nicht verhindert, aber einen Drehwiderstand bildet.

Die Seitenwände 17 bis 19 sitzen mit ihrem freien Endrand auf den Gegenlagerhalterungen 2 und 3 sowie nicht gezeigten weiteren Teilen auf.

Es wird nun auf die jeweils linke Seite der Fig. 1 und 2 Bezug genommen, wo mit der Bezugszahl 20 ein von der Innenseite der Abdeckhaube 1 vorstehender Verhakungssteg mit einem Hakenteil 21 bezeichnet ist. Der Hakenteil 21 des Verhakungsstegs 20 hintergreift ein dem Zungenteil 1 der Gegenlagerhalterung 3 entsprechendes Zungenteil 22 der Gegenlagerhalterung 2. Der Zungenteil 22 weist auf einer einem Gegenlageranschlag 23 gegenüberliegenden Seite eine abgeschrägte Gleitfläche 24 auf, die in ihrer Neigung zur Drehachse des Drehelements 5 einer an dem Hakenteil 21 vorgesehenen Gleitfläche 25 entspricht.

Zwischen der Seitenwand 19 der Abdeckhaube 1 und dem Verhakungssteg 20 ist ein die Steifigkeit der Abdeckhaube erhöhender Quersteg 26 angeordnet.

Mit der Bezugszahl 27 ist in den Fig. 1 und 2 ein innenseitig von der Abdeckhaube 1 vorstehender Anschlagsteg bezeichnet, der in der gezeigten Verhakungsstellung über einen verhältnismäßig kurzen Endabschnitt gegen eine von der Gegenlagerhalterung 2 gegen die Abdeckhaube 1 vorstehende Nase 28 zur Anlage kommt. Der sowohl mit der Seitenwand 18 als auch mit der Deckenwand der Abdeckhaube 1 verbundene Anschlagsteg 27 weist an seinem der Nase 28 zugewandten Ende eine abgeschrägte Endrandfläche 29 auf, die in ihrer Abschrägung einer abgeschrägten Endrandfläche 30 der Nase 28 entspricht. Es wird nun auf die Fig. 3 bis 7 Bezug genommen, wo der in der Anordnung gemäß den Fig. 1 und 2 verwendete Drehbefestigungsbolzen 5 gesondert dargestellt ist.

Wie den Fig. 3 bis 7 zu entnehmen ist, weist der Schaffteil 8 des Drehbefestigungsbolzens 5 Ausnehmungen 32 auf, die lediglich im Zusammenhang mit der Herstellung des Befestigungsbolzens als Kunststoffspritzteil von Bedeutung sind und zur Vermeidung von Materialhäufungen dienen.

Wie aus der Fig. 3 hervorgeht, ist der Kopfteil 6 mit einem Schraubendreherschlitz 33 versehen. An gegenüberliegenden Enden des Schrauberdreherschlitzes 33 erstrecken sich von dem Kopfteil 6 Erhöhungen 34 und 35, zwischen denen eine Verschlußabdeckung für den Schraubendreherschlitz 33 angeordnet und dadurch der Schraubendreherschlitz gänzlich unzugänglich gemacht werden kann.

Um den Umfang des Kopfteils 6 verteilt sind den Rand des Kopfteils 6 gegen den Schaftteil 8 abstützende Rippen 36 vorgesehen. Mit 31 und 50 sind am Kopfteil 6 diametral gegenüberliegend angeordnete Ausnehmungen bezeichnet.

Der Verhakungskopf 10 weist eine erste Verhakungsfläche 37 auf, die auf einem von einer Breitseite des Stegteils 9 vorstehenden Fußteil 38 gebildet ist. An die Verhakungsfläche 37 schließt sich in Umfangsrichtung des Verhakungskopfes eine zweite, gegenüber der Verhakungsfläche 37 teilweise etwas erhöhte Verhakungsfläche 39 an, wobei die zweite Verhakungsfläche 39 durch eine Ausnehmung 40 in dem Stegteil 9 gebildet ist.

Der Verhakungsteil 10 des Drehbefestigungsbolzens 5 weist ferner eine zur Drehachse des Drehbefestigungselements geneigte Gleitfläche 41 auf, welche sich in kopfseitiger Draufsicht auf das Drehbefestigungselement unterhalb der ersten Verhakungsfläche 37 erstreckt.

Mit der Bezugszahl 42 ist eine ähnlich einer Schraubenfläche angeordnete Gleitfläche bezeichnet, zu deren Bildung ein von dem Steg 9 vorspringender Teil 43, ein Endabschnitt des Stegteils 9 und ein weiterer, dem Fußteil 38 in Bezug auf den Stegteil 9 gegenüberliegenden Fußteil 44 beitragen.

Der Fußteil 44 weist ferner eine nach zwei Seiten offene Ausnehmung 45 auf, durch die eine flexible Lippe 46 gebildet ist.

Mit der Bezugszahl 47 ist eine sich senkrecht zur Drehachse des Drehbefestigungsbolzens parallel zur Längsseite des Stegteils 9 erstreckende Bohrung zur Verhinderung einer Materialhäufung bezeichnet.

Zur Befestigung der in den Fig. 1 und 2 gezeigten Abdeckhaube 1 an den Gegenlagerhalterungen 2 und 3 werden zunächst Befestigungsbolzen 5 durch die dafür vorgesehenen Buchsenteile 4 der Abdeckhaube 1 geführt, wobei die flexible Lippe 46 beim Durchgang durch den Buchsenteil 4 nachgibt und sich nach der Durchführung unter Hintergreifen des Buchsenteils 4 aufspreizt, so daß die Drehbefestigungsbolzen 5 an der Abdeckhaube 1 unverlierbar gehaltert sind.

Die Abdeckhaube 1 mit den unverlierbar gehalterten Drehbefestigungsbolzen 5 wird dann zur Befestigung auf die Gegenlagerhalterungen aufgesteckt, wobei sowohl die Verhakungsstege 20 als auch die Drehbefestigungsbolzen 4 gemäß der Ansicht von Fig. 1 mit den Zungenteilen 11 bzw. 22 der Gegenlagerhalterungen 2 bzw. 3 unter Einschnappen verhakt werden. Das Einschnappen wird durch die aufeinander gleitenden Flächen 24,25 bzw. 41,13 sowie die schrägen Flächen 29,30 erleichtert.

Die Drehbefestigungsbolzen 5 werden dann mit Hilfe eines in den Schlitz 33 im Kopfteil 6 des Drehbefestigungsbolzens eingreifenden Schraubendrehers um 90° in die in Fig. 2 gezeigte Stellung gedreht. In dieser Stellung ist der Bolzen bei Krafteinwirkungen über den Zungenteil 11 wesentlich weniger biegsam als in der vorangehenden Stellung. Die verringerte Biegsamkeit ist neben dem in dieser Stellung erhöhten Flächenträgheitsmoment des Stegs 9 darauf zurückzuführen, daß der Steg 9 über einen Teil seiner Länge in der betreffenden Richtung senkreicht zur Drehachse in dem Buchsenteil 4 festgelegt ist. Krafteinwirkungen könnten z.B. dadurch zustande kommen, daß zur unbefugten Entfernung der Abdeckhaube versucht wird, die Abdeckhaube unter Krafteinwirkung z.B. auf die Seitenwand 19 in Richtung zu dem Zungenteil 11 zu verschieben. Eine solche Verschiebung wird aber durch die in der Stellung von Fig. 2 größere Steifigkeit des Drehbefestigungsbolzens 5 verhindert. Der beschriebenen Verschiebung, durch die der Verhakungsteil 21 von dem Zungenteil 22 und damit die gesamte Haubenbefestigung gelöst werden könnte, wird ferner durch den gegen die vorstehende Nase 28 anliegenden Anschlagsteg 27 entgegengewirkt.

In der in Fig. 2 gezeigten Stellung kann der Drehbefestigungsbolzen 5 über eine nicht gezeigte plombierbare Verschlußeinrichtung, die einen in die Ausnehmung 31 oder 50 eingreifenden Sperriegel aufweist, gegen Drehung gesichert werden.

Zum Abnehmen der Abdeckhaube 1 wird der Drehbefestigungsbolzen 5 um 180° gedreht, wobei nach einer Drehung von etwa 90° die schraubenflächenähnlich angeordnete Gleitfläche 42 zur Anlage gegen die Gleitfläche 13 des Zungenteils 11 kommt und den Drehbefestigungsbolzen 5 unter Verdrehung in eine verhakungsfreie Stellung in Richtung zur Oberfläche der Abdeckhaube 1 verschiebt, wobei der Drehbefestigungsbolzen über die Deckeloberfläche hinaus vortritt, wodurch die verhakungsfreie Stellung angezeigt wird.

Zu ihrer Entnahme kann die Abdeckhaube 1 dann auf der Seite, auf der sie mit dem Drehbefestigungsbolzen 5 befestigt war, angehoben werden, wobei durch diese Kippbewegung zunächst der Anschlag zwischen dem Anschlagsteg 37 und der vorstehenden Sperre 28 gelöst wird. Danach ist die angekippte Abdeckhaube 1 so verschiebbar, daß die Verhakung der Teile 21 und 22 gelöst und der Deckel abgenommen werden kann.

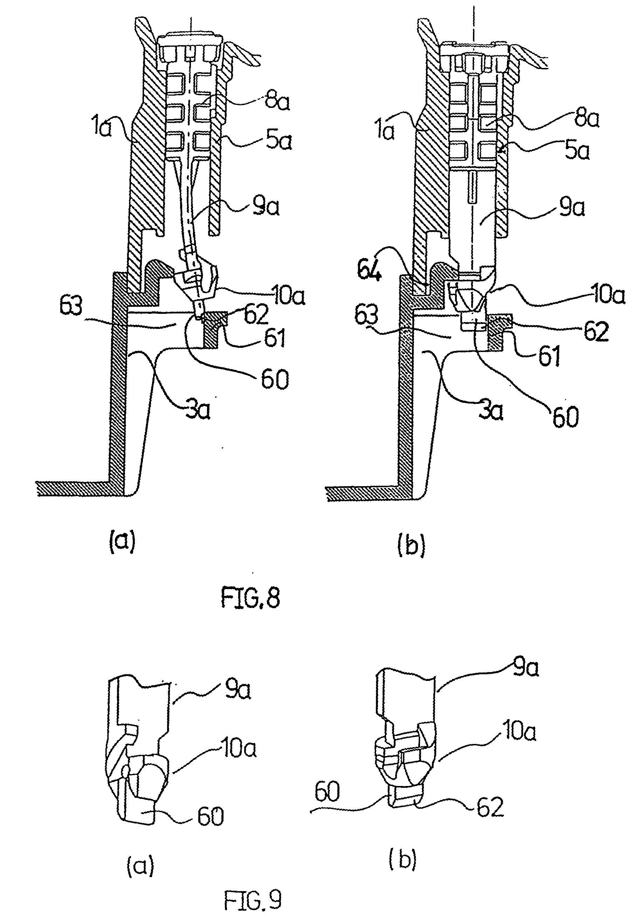

Es wird auf die Fig. 8 und 9 Bezug genommen, wo gleiche oder gleichwirkende Teile mit derselben, jedoch mit dem Buchstaben a versehenen Bezugszahl wie in den vorangehenden Figuren beschrieben sind.

In den Fig. 8 und 9 ist ein Drehbefestigungselement 5a mit einem Schaftteil 8a, einem Steg 9a und einem Verhakungskopf 10a gezeigt, das sich von dem vorangehend beschriebenen Drehbefestigungselement durch einen stegartigen Verlängerungsansatz 60 am Verhakungskopf 10a unterscheidet. Der Stegansatz 60 weist eine Materialaussparung in Form einer Abschrägung 62 auf.

Durch den Stegansatz 60 ist ein Anschlag zur Anlage gegen einen Gegenanschlag 61 gebildet, wobei der Gegenanschlag 61 durch ein von einer Gegenlagerhalterung 3a vorstehendes Ösenteil 63, in das das Drehbefestigungselement 5a hineinragt, gebildet ist.

Wie aus Fig. 8a hervorgeht, gewährleistet die Abschrägung 62 an dem Stegansatz 60, daß das Drehbefestigungselement 5a zur Bildung der Schnappverhakung in der ersten Verhakungsdrehstellung ungehindert an dem den Anschlag 61 bildenden Abschnitt des Ösenteils 63 vorbeigeführt werden kann. Nach Herstellung der Schnappverhakung bildet der zu dem Steg 9a ausgerichtete Stegansatz 60, dessen dem Gegenanschlag 61 zugewandte schmale Seite von dem Gegenanschlag 61 in dieser Stellung nicht weit entfernt ist, einen Anschlag, der verhindert, daß ein zu befestigendes Teil 1a in zur Drehachsenrichtung des Drehbefestigungselements 5a senkrechter Richtung verschoben werden kann.

Eine zusätzliche Festlegung des Teils 1a in der genannten Richtung wird dadurch erreicht, daß das Teil 1a in einen an der Gegenlagerhalterung 3a vorgesehenen Schlitz 64 eingreift.

## Patentansprüche

1. Befestigungsvorrichtung mit einem ein zu befestigendes Teil (1) hintergreifenden, in einer Drehlagerung (4) angeordneten und mit einer Gegenlagerhalterung (3) verhakbaren Drehbefestigungselement (5), das bolzenartig mit einem Schaftteil (8) und einem Verhakungskopf (10) ausgebildet ist, wobei der Verhakungskopf (10) bei Vorschub des Drehbefestigungselements (5) in Richtung seiner Drehachse in einer Richtung senkrecht zur Drehachse elastisch nachgibt, um in einer ersten Verhakungsdrehstellung an der Gegenlagerhalterung (3) einzuschnappen, und wobei das Drehbefestigungselement (5) aus der ersten Verhakungsdrehstellung in eine zweite Verhakungsdrehstellung drehbar ist,
**dadurch gekennzeichnet,**
**dass** das Drehbefestigungselement (5) einen den Verhakungskopf (10) mit dem Schaftteil (8) verbindenden, gegenüber dem Schaftteil im Querschnitt geschwächten Schaftabschnitt (9) aufweist, welcher in der ersten Verhakungsdrehstellung in der genannten Richtung senkrecht zur Drehachse abbiegbar und in der zweiten Verhakungsdrehstellung in dieser Richtung weniger biegsam ist.

2. Befestigungsvorrichtung nach Anspruch 1,
**gekennzeichnet durch** eine weitere Drehstellung, in der das Drehbefestigungselement (5) unverhakt und aus seiner axialen Verhakungsposition zurückziehbar ist.

3. Befestigungsvorrichtung nach Anspruch 1 oder 2,
**dadurch gekennzeichnet,**
**dass** der Drehwinkel zwischen der ersten Verhakungsdrehstellung und den anderen genannten Drehstellungen jeweils etwa 90° beträgt.

4. Befestigungsvorrichtung nach einem der Ansprüche 1 bis 3,
**dadurch gekennzeichnet,**
**dass** als Drehlagerung eine insbesondere mit dem zu befestigenden Teil (1) verbundenes Buchsenteil (4) vorgesehen ist.

5. Befestigungsvorrichtung nach einem der Ansprüche 1 bis 4,
**dadurch gekennzeichnet,**
**dass** der Schaftabschnitt (9) eine längliche Querschnittsfläche aufweist.

6. Befestigungsvorrichtung nach Anspruch 5,
**dadurch gekennzeichnet,**
**dass** der im Querschnitt geschwächte Schaftabschnitt als Steg (9) mit einer dem Durchmesser des Schaftteils (8) entsprechenden Breite ausgebildet ist.

7. Befestigungsvorrichtung nach einem der Ansprüche 1 bis 6,
**dadurch gekennzeichnet,**
**dass** das Drehbefestigungselement (5) Einrichtungen (46) zur unverlierbaren Halterung in der Drehlagerung (4) aufweist.

8. Befestigungsvorrichtung nach Anspruch 7,
**dadurch gekennzeichnet,**
**dass** der Verhakungskopf (10) eine das Buchsenteil (4) hintergreifende flexible Lippe (46) aufweist.

9. Befestigungsvorrichtung nach einem der Ansprüche 4 bis 8,
**dadurch gekennzeichnet,**
**dass** sich der Schaftabschnitt (9) unter Festlegung in den Verhakungsdrehstellungen in das Buchsenteil (4) hinein erstreckt.

10. Befestigungsvorrichtung nach einem der Ansprüche 1 bis 9,
**dadurch gekennzeichnet,**
**dass** der Verhakungskopf (10) eine zur Drehachse geneigte Gleitfläche (41) aufweist, welche sich beim Vorschub gegen einen an der Gegenlagerhalterung (3) gebildeten, einen Gegenlageranschlag (12) aufweisenden Zungenteil (11) anlegt.

11. Befestigungsvorrichtung nach einem der Ansprüche 2 bis 10,
**dadurch gekennzeichnet,**
**dass** der Verhakungskopf (10) eine gegen ein Zungenteil (11) der Gegenlagerhalterung (3) anlegbare, schraubenflächenähnlich angeordnete Gleitfläche (42) zur axialen Verschiebung des Drehbefestigungselements (5) beim Übergang von der ersten Verhakungsdrehstellung in die weitere Drehstellung aufweist.

12. Befestigungsvorrichtung nach Anspruch 11,
**dadurch gekennzeichnet,**
**dass** der Zungenteil (11) der Gegenlagerhalterung (3) auf einer dem Gegenlageranschlag (12) gegenüberliegenden Seite eine entsprechend der Gleitfläche (42) abgeschrägte Gleitfläche (13) aufweist.

13. Befestigungsvorrichtung nach einem der Ansprüche 4 bis 12,
**dadurch gekennzeichnet,**
**dass** beim Drehübergang zwischen der ersten und zweiten Verhakungsdrehstellung ein Drehwiderstand zu überwinden ist, welcher durch eine im axialen Bereich des Schaftabschnitts (9) des Drehbefestigungselements (5) innenseitig von dem Buchsenteil (4) vorstehende, die Drehung des Drehbefestigungselements (5) hemmende Nase (16) gebildet ist.

14. Befestigungsvorrichtung nach einem der Ansprüche 4 bis 13,
**dadurch gekennzeichnet,**
**dass** an dem Buchsenteil (4) Anschläge (14,15) zur Begrenzung des Drehbereichs des Drehbefestigungselements (5) vorgesehen sind.

15. Befestigungsvorrichtung nach Anspruch 14,
**dadurch gekennzeichnet,**
**dass** die Anschläge durch eine sich über einen Abschnitt des Buchseninnenumfangs erstreckende Ausnehmung (14) in dem Buchsenteil (4) und eine mit dem Drehbefestigungselement (5) verbundene, in die Ausnehmung (14) eingreifende Anschlagnase (15) gebildet sind.

16. Befestigungsvorrichtung nach Anspruch 15,
**dadurch gekennzeichnet,**
**dass** die Ausnehmung auf einer dem Verhakungskopf (10) abgewandten axialen Seite durchgehend offen und die axialen Längen der Ausnehmung (14) und der Anschlagnase (15) derart bemessen sind, dass bei einem Anschlag des Verhakungskopfes (10) gegen das Buchsenteil (4) die Anschlagnase (15) mit einem Teil ihrer Länge in der Ausnehmung (14) verbleibt.

17. Befestigungsvorrichtung nach einem der Ansprüche 1 bis 16,
**dadurch gekennzeichnet,**
**dass** ein Kopfteil (6) des Drehbefestigungselements (5) wenigstens eine Ausnehmung (31,50) für den Eingriff eines die Drehung des Drehbefestigungselements blockierenden Verriegelungsteils aufweist.

18. Befestigungsvorrichtung nach einem der Ansprüche 1 bis 17,
**dadurch gekennzeichnet,**
**dass** das Drehbefestigungselement (5a) einen sich von dem Verhakungskopf (10a) erstreckenden Verlängerungsansatz (60) für die Bildung eines das Drehbefestigungselement (5a) in der zweiten Verhakungsdrehstellung in der genannten Richtung senkrecht zur Drehachse an der Gegenlagerhalterung (3a) festlegenden Anschlags aufweist.

19. Befestigungsvorrichtung nach Anspruch 18,
**dadurch gekennzeichnet,**
**dass** der Verlängerungsansatz durch einen zu dem Steg (9a) ausgerichteten Stegansatz (60) gebildet ist.

20. Befestigungsvorrichtung nach Anspruch 19,
**dadurch gekennzeichnet,**
**dass** der Vertängerungsansatz (60) eine unbehindert durch einen Gegenanschlag (61) die Schnappverhakung gewährleistende Materialaussparung (62) aufweist.

## Claims

1. Fastening arrangement having a rotary fastening element (5) which engages behind a part (1) to be fastened, is arranged in a rotary mount (4), can be interlocked with a counter-bearing holder (3) and is designed in a bolt-like manner with a shank part (8) and an interlocking head (10), it being the case that, during advancement of the rotary fastening element (5) in the direction of its axis of rotation, the interlocking head (10) yields elastically in a direction perpendicular to the axis of rotation in order, in a first interlocking rotary position, to snap into the counter-bearing holder (3), and that the rotary fastening element (5) can be rotated out of the first interlocking rotary position into a second interlocking rotary position, **characterized in that** the rotary fastening element (5) has a shank section (9) which connects the interlocking head (10) to the shank part (8), is reduced in cross section in relation to the shank part and, in the first interlocking rotary position, can be bent in the abovementioned direction perpendicular to the axis of rotation and, in the second interlocking rotary position, can be bent to a lesser extent in this direction.

2. Fastening arrangement according to Claim 1, **characterized by** a further rotary position, in which the rotary fastening element (5) is not interlocked and can be drawn back out of its axial interlocking position.

3. Fastening arrangement according to Claim 1 or 2, **characterized in that** the angle of rotation between the first interlocking rotary position and the other rotary positions mentioned above is approximately 90° in each case.

4. Fastening arrangement according to one of Claims 1 to 3, **characterized in that** the rotary mount provided is a bushing part (4) which is connected, in particular, to the part (1) which is to be fastened.

5. Fastening arrangement according to one of Claims 1 to 4, **characterized in that** the shank section (9) has an elongate cross-sectional surface.

6. Fastening arrangement according to Claim 5, **characterized in that** the cross-sectionally reduced shank section is designed as a crosspiece (9) with a width corresponding to the diameter of the shank part (8).

7. Fastening arrangement according to one of Claims 1 to 6, **characterized in that** the rotary fastening element (5) has devices (46) for securing in captive fashion in the rotary mount (4).

8. Fastening arrangement according to Claim 7, **characterized in that** the interlocking head (10) has a flexible lip (46) engaging behind the bushing part (4).

9. Fastening arrangement according to one of Claims 4 to 8, **characterized in that** the shank section (9) extends into the bushing part (4), with fixing in the interlocking rotary positions.

10. Fastening arrangement according to one of Claims 1 to 9, **characterized in that** the interlocking head (10) has a sliding surface (41) which is inclined in relation to the axis of rotation and, during advancement, positions itself against a tongue part (11) which is formed on the counter-bearing holder (3) and has a counter-bearing stop (12).

11. Fastening arrangement according to one of Claims 2 to 10, **characterized in that** the interlocking head (10) has a sliding surface (42) which can be positioned against a tongue part (11) of the counter-bearing holder (3), is arranged in a manner similar to a screw surface and is intended for axially displacing the rotary fastening element (5) during transfer from the first interlocking rotary position into the further rotary position.

12. Fastening arrangement according to Claim 11, **characterized in that**, on a side which is located opposite the counter-bearing stop (12), the tongue part (11) of the counter-bearing holder (3) has a sliding surface (13) which is bevelled to correspond to the sliding surface (42).

13. Fastening arrangement according to one of Claims 4 to 12, **characterized in that**, during rotary transfer between the first and second interlocking rotary positions, it is necessary to overcome a resistance to rotation which is formed by a nose (16) which projects from the bushing part (4) on the inside, in the axial region of the shank section (9) of the rotary fastening element (5), and inhibits the rotation of the rotary fastening element (5).

14. Fastening arrangement according to one of Claims 4 to 13, **characterized in that** stops (14, 15) for limiting the range of rotation of the rotary fastening element (5) are provided on the bushing part (4).

15. Fastening arrangement according to Claim 14, **characterized in that** the stops are formed by a recess (14) in the bushing part (4), said recess extending over a section of the inner circumference of the bushing, and by a stop nose (15), which is connected to the rotary fastening element (5) and engages in the recess (14).

16. Fastening arrangement according to Claim 15, **characterized in that** the recess is open throughout on an axial side which is directed away from the interlocking head (10), and the axial lengths of the recess (14) and of the stop nose (15) are dimensioned such that, when the interlocking head (10) strikes against the bushing part (4), part of the length of the stop nose (15) remains in the recess (14).

17. Fastening arrangement according to one of Claims 1 to 16, **characterized in that** a head part (6) of the rotary fastening element (5) has at least one recess (31, 50) for the engagement of a locking part which blocks the rotation of the rotary fastening element.

18. Fastening arrangement according to one of Claims 1 to 17, **characterized in that** the rotary fastening element (5a) has a lengthening extension (60) which extends from the interlocking head (10a) and is intended for forming a stop which fixes the rotary fastening element (5a) on the counter-bearing holder (3a) in the abovementioned direction perpendicular to the axis of rotation in the second interlocking rotary position.

19. Fastening arrangement according to Claim 18, **characterized in that** the lengthening extension is formed by a crosspiece extension (60) which is aligned with the crosspiece (9a).

20. Fastening arrangement according to Claim 19, **characterized in that** the lengthening extension (60) has a material cutout (62) which ensures snap-in interlocking without obstruction by a mating stop (61).

## Revendications

1. Dispositif de fixation comportant un élément de fixation rotatif (5) engageant par l'arrière une partie (1) à fixer, qui est agencé dans un palier rotatif (4) et qui peut s'accrocher avec un support de palier antagoniste (3), qui est réalisé à la manière d'un goujon avec une partie de fût (8) et une tête d'accrochage (10), la tête d'accrochage (10) fléchissant de manière élastique, lors de l'avance de l'élément de fixation rotatif (5) en direction de son axe de rotation, dans une direction perpendiculaire à l'axe de rotation, pour s'encliqueter dans une première position de rotation d'accrochage sur le support de palier antagoniste (3), et l'élément de fixation rotatif (5) pouvant tourner depuis la première position de rotation d'accrochage jusque dans une deuxième position de rotation d'accrochage, **caractérisé en ce que** l'élément de fixation rotatif (5) présente un tronçon de fût (9) reliant la tête d'accrochage (10) à la partie de fût (8) et dont la section est affaiblie par rapport à la partie de fût, lequel tronçon de fût (9) peut être fléchi perpendiculairement à l'axe de rotation dans la première position de rotation d'accrochage et est moins souple dans cette direction dans la deuxième position de rotation d'accrochage.

2. Dispositif de fixation selon la revendication 1, **caractérisé par** une autre position de rotation dans laquelle l'élément de fixation rotatif (5) n'est pas accroché et peut être retiré hors de sa position d'accrochage axiale.

3. Dispositif de fixation selon l'une ou l'autre des revendications 1 et 2, **caractérisé en ce que** l'angle de rotation entre la première position de rotation d'accrochage et les autres positions de rotation énoncées est respectivement d'approximativement 90°.

4. Dispositif de fixation selon l'une des revendications 1 à 3, **caractérisé en ce qu'**il est prévu comme palier rotatif une partie de manchon (4) reliée en particulier avec la partie à fixer (1).

5. Dispositif de fixation selon l'une des revendications 1 à 4, **caractérisé en ce que** le tronçon de fût (9) présente une superficie de section allongée.

6. Dispositif de fixation selon la revendication 5, **caractérisé en ce que** le tronçon de fût à section affaiblie est réalisé sous forme de barrette (9) avec une largeur correspondant au diamètre de la partie de fût (8).

7. Dispositif de fixation selon l'une des revendications 1 à 6, **caractérisé en ce que** l'élément de fixation rotatif (5) présente des moyens (46) permettant le maintien imperdable dans le palier rotatif (4).

8. Dispositif de fixation selon la revendication 7, **caractérisé en ce que** la tête d'accrochage (10) présente une lèvre (46) flexible s'engageant derrière la partie de manchon (4).

9. Dispositif de fixation selon l'une des revendications 4 à 8, **caractérisé en ce que** le tronçon de fût (9) s'étend dans la partie de manchon (4) en s'immobilisant dans les positions de rotation d'accrochage.

10. Dispositif de fixation selon l'une des revendications 1 à 9, **caractérisé en ce que** la tête d'accrochage (10) présente une surface de glissement (41) inclinée vers l'axe de rotation, qui, lors de l'avance, vient en appui contre une partie de languette (11) présentant une contre-butée de palier (12) et formée sur le support de palier antagoniste (3).

11. Dispositif de fixation selon l'une des revendications 2 à 10, **caractérisé en ce que** la tête d'accrochage (10) présente une surface de glissement (42) agencée à la manière d'une surface hélicoïdale et pouvant venir en appui contre une partie de languette (11) du support de palier antagoniste (3) pour déplacer axialement l'élément de fixation rotatif (5) lors du passage depuis la première position de rotation d'accrochage jusque dans l'autre position de rotation.

12. Dispositif de fixation selon la revendication 11, **caractérisé en ce que** la partie de languette (11) du support de palier antagoniste (3) présente sur un côté opposé à la contre-butée de palier (12) une surface de glissement (13) chanfreinée correspondant à la surface de glissement (42).

13. Dispositif de fixation selon l'une des revendications 4 à 12, **caractérisé en ce que** lors du passage rotatif entre la première position de rotation d'accrochage et la deuxième position de rotation d'accrochage, il faut surmonter une résistance de rotation qui est formée par un ergot (16) faisant saillie sur la face intérieure de la partie de manchon (4) dans la région axiale du tronçon de fût (9) de l'élément de fixation rotatif (5) et ralentissant la rotation de l'élément de fixation rotatif (5).

14. Dispositif de fixation selon l'une des revendications 4 à 13, **caractérisé en ce que** sur la partie de manchon (4) sont prévues des butées (14, 15) pour limiter la zone de rotation de l'élément de fixation rotatif (5).

15. Dispositif de fixation selon la revendication 4, **caractérisé en ce que** les butées sont formées par un évidement (14) s'étendant dans la partie de manchon (4) sur un tronçon de la périphérie intérieure du manchon et par un ergot de butée (15) relié à l'élément de fixation rotatif (5) et s'engageant dans l'évidement (14).

16. Dispositif de fixation selon la revendication 15, **caractérisé en ce que** l'évidement est ouvert de bout en bout sur un côté axial détourné de la tête d'accrochage (10) et les longueurs axiales de l'évidement (14) et de l'ergot de butée (15) ont des dimensions telles que lors d'une venue en butée de la tête d'accrochage (10) contre la partie de manchon (4), l'ergot de butée (15) reste avec une partie de sa longueur dans l'évidement (14).

17. Dispositif de fixation selon l'une des revendications 1 à 16, **caractérisé en ce qu'**une partie de tête (6) de l'élément de fixation rotatif (5) présente au moins un évidement (31, 50) pour l'engagement d'une partie de verrouillage bloquant la rotation de l'élément de fixation rotatif.

18. Dispositif de fixation selon l'une des revendications 1 à 17, **caractérisé en ce que** l'élément de fixation rotatif (5a) présente un appendice de prolongement (60) s'étendant depuis la tête d'accrochage (10a) pour la formation d'une butée immobilisant l'élément de fixation rotatif (5a) sur le support de palier antagoniste (3a) dans la deuxième position de rotation d'accrochage dans ladite direction perpendiculairement à l'axe de rotation.

19. Dispositif de fixation selon la revendication 18, **caractérisé en ce que** l'appendice de prolongement est formé par un appendice de barrette (60) aligné par rapport à la barrette (9a).

20. Dispositif de fixation selon la revendication 19, **caractérisé en ce que** l'appendice de prolongement (60) présente un dégagement de matériau (62) assurant sans entrave par à une contre-butée (16) l'accrochage par encliquetage.
